# EUROPEAN PATENT APPLICATION

(11) **EP 1 632 133 A1**
(43) Date of publication of application: **08.03.2006**
(21) Application number: 04077463.0
(22) Date of filing: 03.09.2004
(51) Int. Cl.: A01G 31/00

(54) **Substrate for plants comprising quantification means**

(71) Applicant: Rockwool International A/S, 2640 Hedehusene (DK)
(72) Inventor: Stradiot, Peter O.M., 3020 Herent (BE)
(74) Representative: Grootscholten, Johannes A.M.

(57) **Abstract**

The invention relates to a substrate for a soil-free cultivating or growing of plants. The substrate comprises a slab (2) of fibrous material. Further quantification means (5) are provided. The quantification means allow for essentially non-destructive visualisation and/or monitoring of plant development. Thus plant growth, especially root growth can be monitored, where such monitoring no longer requires the sacrifice of any plants.

## Description

The present invention relates to a substrate for soil-free cultivation or growing of plants. Such substrates are commonly known in this technical field, and comprise a slab of fibrous material.

For many years now many developments have taken place to improve the quality of such substrates to replace soil. In realising these achievements, much progress in providing the best possible substrate has been made.

However, in greenhouses and under test conditions in for example a laboratory many parameters have to be set and monitored in order to achieve the best possible growth of plants, and this is where problems arise with the prior art substrates. A laboratory technician or a plant grower can not look inside the slab to inspect and monitor plant development.

It is hither to been common practise to determine plant development on the basis of root growth. However, for a laboratory technician or a plant grower to inspect root growth, the only prior art solution was to break apart a slab and visually inspect root development. This, however, inevitably leads to the death of a plant because of damage to the root system thereof. Moreover, in order to obtain a statistically more valid determination of root growth than by taking a single sample, many plants will not survive the prior art monitoring methods, which is clearly undesirable.

In order to remedy or at least lessen the above mentioned drawbacks of the prior art, according to the invention a substrate is provided, which is distinguished by quantification means for essentially non-destructive visualisation and/or monitoring of plant development.

With a substrate according to the present invention it is possible to monitor plant development and even keeping records of plant development in time. By keeping such records the development of single plants in time, that are not destroyed by the act of monitoring, a better insight can be obtained into the right conditions to be maintained and/or adjusted for the desired plant development. This is both true for the practise of the plant grower, as well as for the slab or substrate developers in a laboratory environment, when the latter named laboratory technicians develop new substrate products and desire to ascertain the quality thereof.

In a preferred embodiment the quantification means comprise at least one indicator of root growth. As mentioned above, root growth is one of the primary concerns, when monitoring plant development. By arranging indicators of the root growth, the root growth can be monitored in time and parameters, such as temperature, humidity, supplied amounts of water, etc. can be set or adjusted in accordance with the root growth detected with the quantification means, measured by the indicator. The indicator may, according to the invention, comprise at least two parallel lines over a side or an inside of the slab. Thus, at least two prints in time can be determined, i.e. when the roots in a downward growth direction reach the first of the two parallel lines and when the roots reach the lower of the two parallel lines. For this the lines are arranged at different heights or depths of the slab. Similarly vertical lines can be also used as indicators to monitor root growth in the horizontal direction. By employing lines both horizontal and parallel, a grid has an indicator can be formed, providing the opportunity of monitoring root growth in all directions, i.e. vertical downward and sideward. The indicator is preferably arranged on an additional sheet of transparent material arranged on or in the slab. Since the slab comprises fibrous material, printing or otherwise arranging indicators or even other quantification means may proof to be difficult, for which reason it is beneficial to employ said additional sheet as a carrier for the indicator. In such an embodiment the sheet can be formed from a printable transparent material, such as high density polyurethane, on which the indicator may then be arranged. Such materials as polyurethane (but not only this material) exhibits the preferred property of being resistant to the conditions, that correspond with growing plants, such as humidity, higher than average temperatures, etc.

Additionally or alternatively the quantification means may comprise registration means for registering the monitored plant development. Such registration means may comprise codes, corresponding with the indicator for keeping a record of codes in conjunction with root growth progress. For instance in an embodiment where the quantification means comprise a grid, the grid can be designated by codes, such as letters in the vertical direction and numbers in the horizontal direction. The record may then consist of an overview of the root growth progress in a form, wherein it is registered, when the roots of a specific plant at a specific position on or in the slab have reached a grid part designated by a letter in combination with a number. Needless to say, many other kinds of codes can be employed, but the proposed codes in the form of letters in one direction and numbers in another has the advantage, that not every grid element has to have a separate distinguishable code or reference, because the letters and numbers may be arranged along the edges of the slab. The grid elements at a distance from the edged of the slab are then automatically also referred to by the combination of a letter and a number.

Alternatively or additionally the quantification means are arranged along at least one free side of the slab. Thus it is possible to monitor the plant development of all of the plants arranged along that specific side of the slab, or at least the development of the plants can be monitored, as far as the quantification means extend along that side. Specifically if the quantification means are fixed to that one free side of the slab, then a removable and replaceable cover is preferably arranged over the quantification means. By lifting such a cover, visual inspection may suffice to get an adequate insight into the plant development and root growth, after which the cover can be rearranged over the quantification means. Thus it is avoided, that root growth toward the side of the slab is inhibited by incident daylight. The roots are free to grow toward the free side and even out of the fibrous material of the slab, making these roots visible in relation to the quantification means.

Additionally or alternatively the slab may comprise at least one removable and replaceable slab part of fibrous material to obtain an insight into plant development and root growth at distance from the sides of the slab. Then in use the slab part of fibrous material is at least partially surrounded by (remaining parts of) the slab and the quantification means may be arranged on at least one side of the slab part or of the slab portions surrounding at least partially the slab part. Such a slab part may be block shaped or cylindrical, or may have any other convenient form, that is suitable for the intended purpose of plant development monitoring. In any case, it is preferred that such a slab part can be adhered or fixed to the remaining slab portions surrounding at least partially the slab part, for which purpose engaging means for selectively coupling the slab part and the slab portions may be provided. In a possible embodiment such engaging means may be provided in the form of velcro or bands or tapes with a limited adhering capacity, such that the slab part can be released quite easily, and preferably maintaining the capacity to adhere to the fibrous material and/or the material of a cover over the fibrous material, after such a band or tape has once been released.

Below, a selected few embodiments of substrates according to the present invention are described under reference to the accompanying drawings, wherein the same or similar components are designated with the same reference numbers, and wherein:
fig. 1 shows a perspective view of a substrate according to the present invention;
fig. 2 shows the same substrate as fig. 1, packed in a cover;
fig. 3 shows a different embodiment of the present invention than fig. 1; and
fig. 4 is a view of a specific embodiment of quantification means as a part of a substrate according to the present invention.

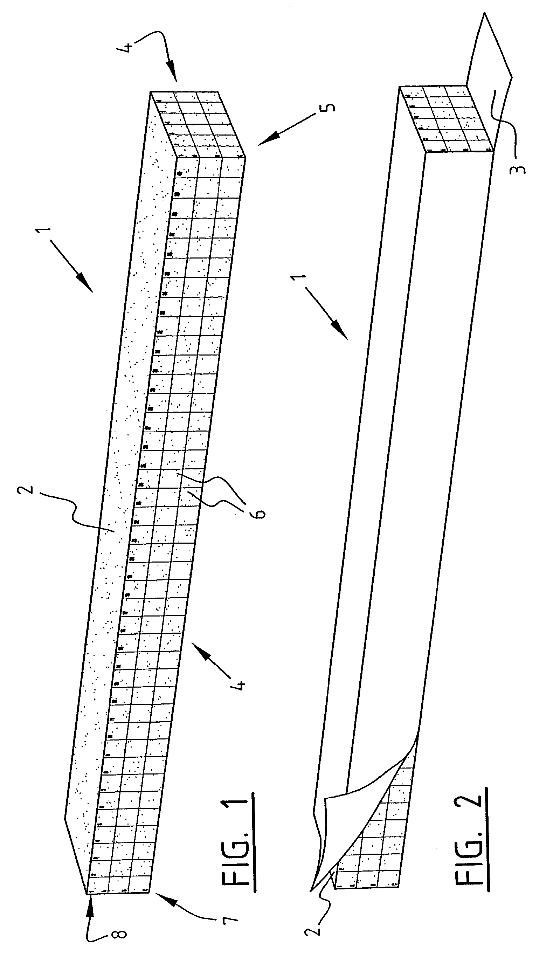

Fig. 1 shows a substrate 1 according to the present invention. Such a substrate 1 comprises a slab 2 of fibrous material, which is normally covered by plastic foil 3, as shown in fig. 2.

Along the sides 4 of the slab 2 comprising fibrous material, quantification means 5 are arranged. The quantification means 5 form an indicator of root growth. The quantification means as indicator of the root growth are, in the embodiment shown in fig. 1 and 2, in the form of a grid 6. The grid is formed to subdivide the sides 4 of the slab 2 of fibrous material into distinguishable sections. The sections are distinguishable by combination of codes 7, 8, that are arranged along the side edges of the slab 2. The codes 7 are letters and codes 8 are numbers. Any specific combination of one of the used letters as code 7 and one of the numbers as code 8 is an unambiguous indication of one of the sections, into which the side surface of the slab 2 is divided by the grid 6.

A laboratory technician and/or a plant grower can keep a record of plant development on the basis of root growth in both the vertical downward direction and the sideways directions, into which the roots need to grow, by registering the date and time, at which the roots of one specific plant or any number of plants cross a line of the grid in any desired direction. If root growth falls behind an expected or desired schedule, the parameters of growing plants can be adjusted, for instance by setting higher or lower temperatures, providing more or less water, etc. For laboratory technicians or developers of slabs of fibrous material, the results of monitoring plant development in experimental slabs can provide important information whether or not such an experimental slab has a desired water retention characteristic, cohesion, etc. Thus, the quality of a newly developed slab can be tested.

The quantification means 5, forming an indicator of root growth, can be inspected by lifting the foil 3, as shown in fig. 2, from the substrate 1. After having visually or automatically inspected the quantification means formed by the indicator 5, the foil can be lowered again to close of the slab 2 from sunlight, which would inhibit roots from growing toward the side of the slab, where the quantification means 5 are arranged. Thus, the roots of a plant are free to grow toward the sides 4 of the slab 2, becoming visible at the surface of the sides 4 to be observed by a user. In an embodiment a sheet of high density polyurethane can be used, that is arranged against the sides 4 of the slab 2. Such a sheet can be printed to visualise the grid 6 and preferably also the letter codes 7 and the number codes 8. Such a sheet can be fixed to at least one side of the slab 2, but may also be loose to enable repeated use thereof to quantify plant development and particularly root growth at/in another substrate, after having lifted the foil 3 (figure 2) off at least one side thereof. As a matter of fact, a removable, preferably transparent ruler or the like can also be employed as an embodiment of quantification means in accordance with the present invention. Alternatively, in the place of such a sheet, also a fishnet-type element can be employed which can then be arranged against the sides 4 of the slab 2 to form the quantification means. The advantage of such an embodiment over a fixed sheet of polyurethane could be, that such a fishnet-type element would have less influence or effect on the penetration of air into the slab 2, or can allow water to seep out more easily. Similar, if not identical, considerations apply for a further embodiment, in which codes 7, 8 and/or grid 6 is/are arranged on or at sides 4 by means of laser marking, whereby a laser is used to "burn" markings forming the codes 7, 8 and/or the grid 6 on the sides 4 of a slab 2.

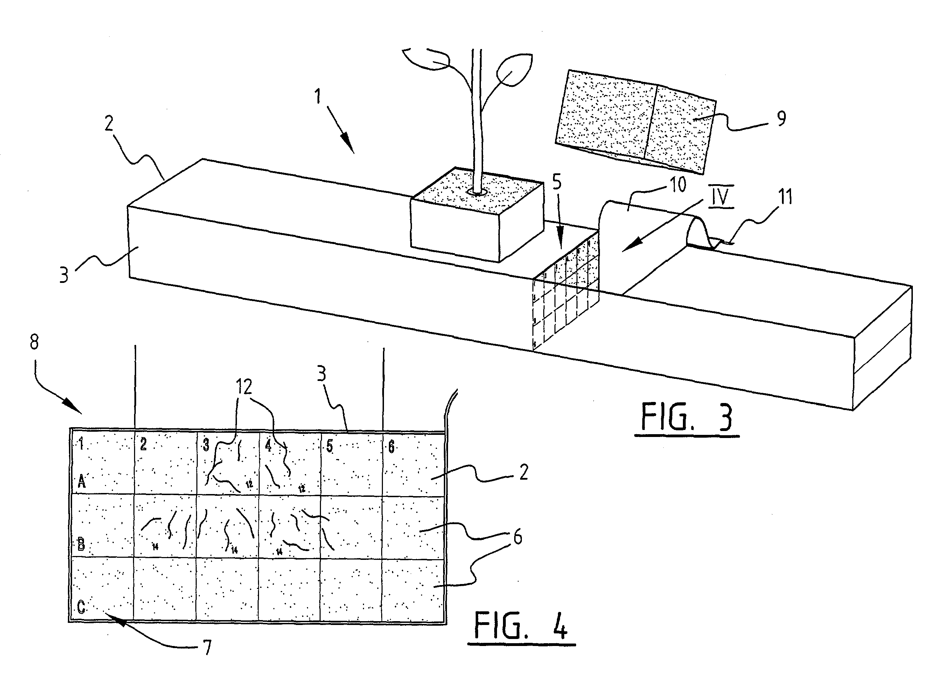

In fig. 3 an alternative or possibly additional embodiment is shown, relative to figures 1 and 2. In figures 1 and 2 the sides 4 of the slab 2 are provided with quantification means. In fig. 3 and shown in more detail in fig. 4, the quantification means 5 are arranged on an inner surface of the slab 2 of the substrate 1. The inner surface, on which the quantification means 5 are arranged, forms a boundary with a block 9, being a slap part of fibrous material. In use, the block 9 will normally be arranged against the quantification means 5, and a flap of plastic material 10, forming a part of the foil 3, will then be arranged over the block 9. By opening the flap 10, the block 9 can be removed for visual inspection of the quantification means. After visual inspection and possible registration of the results in for instance a record, the block can be replaced against the quantification means, after which the flap 10 can be closed over the block 9. The flap 10 can then be fixed to the foil with adhesive bands 11 or any other suitable means, such as velcro, to keep the flap 10 positively closed over the block 9.

With the flap 10 open and the block 9 removed a view is obtained, such as the one, that is shown in fig. 4. Clearly recognisable in the view of fig. 4 are the roots 12, which are recognisable relative to the fibrous material of the slab 2 quite easily e.g. by their appearance and/or colour, etc. Plant development is determined to a high degree by root growth. It is clear from fig. 4, that root growth can easily be monitored by keeping a record of the moment in time, that roots 12 cross a boundary of the grid 6 forming the quantification means. If root growth falls behind a desired or expected schedule, this can give rise to adjustment of parameters, such as temperature, humidity, water and nutrient supply, etc.

It is noted here, that the view of fig. 4 is not just a view in the direction of arrow IV in fig. 3, but that the representation shown in fig. 4 can be a registration of for example a digital photograph. In the photograph, image processing techniques can be employed to determine where and how many roots have grown.

As noted above, the roots are distinguishable and identifiable by their colour. Image processing can then be employed to determine how much of the surface of a square of the grid 6 is covered by the roots. This can be determined for the entire image, and/or for each of the squares of the grid 6.

Further, it is possible to make these results available for a processing in for example a data base or similar data processing program or spreadsheet program. For each of the squares of the grid 6 root growth and increased coverage of each of the squares of the grid 6 in time can be memorized and even visualised for example in graphs. By comparison with a standard, for instance information about average root growth, above average root growth and excellent root growth, adjustment of the setting of parameters in a laboratory or a greenhouse can be decided upon. Such a standard may be also in the form of a graph for easy visualisation of plant development relative to the standard, or may also have the form simply of numbers or ratios or percentages of coverage by roots of selected squares of the grid 6 in time, i.e. relative to the date of planting.

It should be noted here, that many additional and alternative embodiments will become immediately apparent to the skilled person in the relevant art of substrate technology, after having learnt about the present invention. Such alternative and additional embodiments are only then not within the scope of protection for the present invention, if these alternative and additional embodiments do not comply with the spirit of the present invention and the scope of protection defined in the appended claims. For instance, it is possible within the scope of the invention to simply provide strings defining lines along inside or outside surfaces of a slab of fibrous material. The letter codes and number codes could be replaced with any other suitable means for registering root growth. In the embodiments described herein above straight lines are used, forming a grid. Alternatively or additionally, cup-shaped or U-shaped lines may also be used, which could then be centred on a location intended for growing a plant. Root growth would then require far less information for registration thereof, because roots crossing a cup-shaped or semi-circular line provides sufficient information on root growth in all directions from the location. However this approach requires a higher degree of accuracy when arranging the plants relative to the slab, but this could also be considered an advantage, because accurate placement is already a requirement for optimal use of space provided on the slabs. Further, also inclined lines could be employed, or even discontinuous lines, regardless of the orientation thereof, such as dashed lines, dash-dot lines, etc.

## Claims

1. Substrate for soil-free cultivating or growing of plants, comprising a slab of fibrous material, and quantification means for essentially non-destructive visualisation and/or monitoring of plant development.

2. Substrate according to claim 1, wherein the quantification means comprise at least one indicator of root growth.

3. Substrate according to claim 2, wherein the indicator comprises at least two parallel lines over a side or an inside of the slab.

4. Substrate according to claim 2, wherein the lines are arranged at different heights or depths of the slab.

5. Substrate according to claim 2, 3 or 4, wherein the indicator comprises a grid.

6. Substrate according to at least claim 2, wherein the indicator is arranged on an additional sheet of transparent material fixedly or removably and selectively arranged on or in the slab.

7. Substrate according to claim 6, wherein the sheet is made from a printable transparent material, such as high-density polyurethane, on which the indicator is arranged.

8. Substrate according to at least one of the preceding claims 2-7, wherein the indicator comprises a fishnet-type element.

9. Substrate according to at least one of the preceding claims 2-8, wherein the indicator comprises laser-markings.

10. Substrate according to at least one of the preceding claims, wherein the quantification means are selectively arranged on, in or at the slab.

11. Substrate according to a preceding claim, wherein the quantification means comprises registration means for registering the monitored plant development.

12. Substrate according to at least claims 2 and 11, wherein the registration means comprise codes corresponding with the indicator for keeping a record of codes in conjunction with root growth progress.

13. Substrate according to a preceding claim, wherein the quantification means are arranged along at least one free side of the slab.

14. Substrate according to claim 13, wherein a removable and replaceable cover is arranged over the quantification means.

15. Substrate according to a preceding claim, wherein the slab comprises at least one removable and replaceable slab part of fibrous material, in use at least partially surrounded by the slab, and wherein the quantification means are arranged on at least a side of the slab part or of the slab portions surrounding at least partially the slab part.

16. Substrate according to claim 15, wherein the slab part is block shaped.

17. Substrate according to claim 15 or 16, further comprising engaging means for selectively coupling the slab part and the slab portions.

18. Method of testing an experimental substrate according to anyone of the preceding claims, or monitoring development of plants on such a substrate, e.g. in a greenhouse, comprising: registering information on plant development obtained from the quantification means.

19. Method according to claim 18, further comprising:
determining a need for adjustment of parameters of an experimental substrate or of settings in a greenhouse, and
adjustment of said parameters when a need to do so is determined.

20. Method according to claim 18 or 19 where the step of registering information comprises capturing an image of the quantification means and with image processing providing a measure of plant development.

21. Method according to claim 20, where image processing is performed digitally with a computer, and the image is digital.

22. Method according to claim 20 or 21, wherein the measure of plant development is stored or memorised for future reference or for comparison with a standard.

23. Method according to claim 20, 21 or 22 wherein the measure of plant development is root growth, determined by coverage of roots in the image or selected portions thereof.

24. Method according to claim 23 when performed with a substrate according to claim 3, where the selected portions of the image correspond with division of the side or inside of the slab by the lines.
